(19) **Europäisches Patentamt**
**European Patent Office**
**Office européen des brevets**

(11) **EP 1 950 754 A1**

(12) **EUROPEAN PATENT APPLICATION**

(43) Date of publication:
**30.07.2008 Bulletin 2008/31**

(51) Int Cl.:
**G11B 7/125** (2006.01) **G11B 7/0045** (2006.01)
**G11B 19/12** (2006.01) **G11B 7/00** (2006.01)

(21) Application number: **08001209.9**

(22) Date of filing: **23.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.01.2007 JP 2007015880**

(71) Applicant: **Funai Electric Co., Ltd.**
**Daito-shi,**
**Osaka 574-0031 (JP)**

(72) Inventor: **Mataga, Masaki**
**Daito-shi**
**Osaka 574-0013 (JP)**

(74) Representative: **Beetz & Partner**
**Steinsdorfstrasse 10**
**80538 München (DE)**

(54) **Optical disc recording apparatus**

(57)     A DSP (32) of a disc recorder (100) includes an identification information obtaining portion (321) for obtaining type identification information stored in an optical disc (a DVD-R) (2) for identifying a manufacturer and a type of the optical disc, a type memory portion (326) for storing a plurality of type identification information in advance, a type deciding portion (322) for deciding whether or not the obtained type identification information matches any one of the plurality of type identification informa-
tion stored in the type storing portion (326), a parameter obtaining portion (323) for obtaining strategy parameters stored in the optical disc (2) if the type deciding portion decides that the former type identification information does not match any one of the latter type identification information, a parameter correcting portion (324) for correcting the obtained strategy parameter, and a recording condition setting portion (325) for setting recording conditions for the optical disc (2) based on the corrected strategy parameter.

FIG.2

**Description**

**BACKGROUND OF THE INVENTION**

**Field of the Invention**

The present invention relates to an optical disc recording apparatus for recording information by projecting a laser beam from an optical pickup to an optical disc.

**Description of Related Art**

The optical disc recording apparatus such as a DVD recorder or the like projects a laser beam from the optical pickup to an optical disc such as a digital versatile disk (DVD) or the like for recording information, and the operation of recording information on the optical disc is performed by the laser beam projected from the optical pickup. Here, it is necessary to set precisely a width, an interval and a level of a pulse signal to be supplied to a laser diode (LD) disposed in the optical pickup in order to form pits or the like on the optical disc that conform the standard.

The above-mentioned setting is performed conventionally based on setting information (hereinafter referred to as "strategy information") provided from a manufacturer of the optical disc. In other words, the strategy information is stored in an area disposed at a predetermined position (e.g., an inner radius side) of the optical disc (i.e., a physical format information (PFI) area) in association with a manufacture identifier (MID) that is information for identifying a manufacturer and a type of the optical disc. Then, the optical disc recording apparatus such as the DVD recorder reads out the strategy information stored in the optical disc and sets the recording conditions based on the read strategy information so as to perform the recording operation.

However, the optical disc recording apparatus such as the DVD recorder has its own characteristics of the pickup or the like that are unique to the apparatus. Therefore, if the recording conditions are set in accordance with the strategy information provided from a manufacturer of the optical disc, there may be the case in which the recording operation cannot be performed with appropriate conditions. In order to solve this problem, various apparatuses and methods have been proposed. For example, JP-A-2006-323884 discloses an optical disc apparatus that changes recording power so that the irradiation energy becomes the same when test data is recorded with different conditions, thereby an appropriate condition is found to be a condition with the minimum quantity of jitter.

However, the optical disc apparatus described above needs relatively long time for recording with a plurality of conditions so as to find the appropriate condition and for setting the appropriate recording condition. In addition, it is necessary to consume an area that is preset on the optical disc for recording the test data (hereinafter referred to as a "test area").

**SUMMARY OF THE INVENTION**

An object of the present invention is to provide an optical disc recording apparatus that can set appropriate recording conditions in short time.

An optical disc recording apparatus according to the present invention, which is an apparatus for recording information on an optical disc by projecting a laser beam to the optical disc from an optical pickup, includes an identification information obtaining portion for reading and obtaining type identification information stored in the optical disc for identifying a manufacturer and a type of the optical disc, a type storing portion for storing a plurality of type identification information corresponding to other optical discs having different manufacturers and types in advance, a type deciding portion for deciding whether or not the type identification information obtained by the identification information obtaining portion matches any one of the plurality of type identification information corresponding to other optical discs having different manufacturers and types stored in the type storing portion, a parameter obtaining portion for reading and obtaining strategy parameters stored in the optical disc for defining recording conditions recommended by the manufacturer if the type deciding portion decides that the former type identification information does not match any one of the latter type identification information, a parameter correcting portion for correcting the strategy parameters obtained by the parameter obtaining portion, and a recording condition setting portion for setting recording conditions for the optical disc based on the strategy parameters corrected by the parameter correcting portion.

According to this structure, the type identification information stored in the optical disc for identifying a manufacturer and a type of the optical disc is obtained. In addition, the type storing portion stores in advance a plurality of type identification information corresponding to other optical discs having different manufacturers and types, and it is decided whether or not the obtained type identification information matches any one of the plurality of type identification information corresponding to other optical discs having different manufacturers and types stored in the type storing portion. Then, if it is decided that the former type identification information does not match any one of the latter type identification information, strategy parameters stored in the optical disc for defining recording conditions recommended by the manufacturer are read and obtained. The obtained strategy parameters are corrected. Then, the recording conditions of the optical disc are set based on the corrected strategy parameter. Therefore, the recording conditions can be set appropriately in short time.

In other words, since the strategy parameters defining the recording conditions recommended by the manufacturer are corrected and the recording conditions are set based on the corrected strategy parameter, the recording conditions can be set without recording test data in the test area. Further, since the strategy parameters recommended by the manufacturer are corrected to an appropriate value and is set, the recording conditions can be set appropriately in short time.

In addition, the optical disc recording apparatus according to the present invention having the structure described above further includes a parameter storing portion for storing preset strategy parameters for each of the plurality of type identification information corresponding to other optical discs having different manufacturers and types stored in the type storing portion, in association with the same, in which if the type deciding portion decides that the former type identification information matches any one of the latter type identification information, the recording condition setting portion reads the strategy parameters corresponding to the type identification information that was decided to match from the parameter storing portion and sets the recording conditions based on the read strategy parameter.

According to this structure, preset strategy parameters are stored in the parameter storing portion for each of the plurality of type identification information corresponding to other optical discs having different manufacturers and types stored in the type storing portion, in association with the same. If it is decided that the former type identification information matches any one of the latter type identification information, i.e., the plurality of type identification information corresponding to other optical discs having different manufacturers and types stored in the type storing portion, the strategy parameters corresponding to the type identification information that was decided to match is read from the parameter storing portion, and the recording conditions are set based on the read strategy parameter. Therefore, the recording conditions can be set appropriately in shorter time.

More specifically, as for optical discs that are assumed to be used when the optical disc recording apparatus is manufactured (corresponding to the plurality of other optical discs having different manufacturers and types stored in the type storing portion), appropriate recording conditions are searched by a method of test writing or the like, so that the strategy parameters defining the recording conditions are stored in advance in the parameter storing portion. Thus, the strategy parameters are read from the parameter storing portion, and the recording conditions are set based on the read strategy parameter, so that the recording conditions can be set appropriately in shorter time.

In addition, as to the optical disc recording apparatus according to the present invention having the structure described above, the parameter correcting portion corrects the strategy parameters corresponding to the optical disc based on the strategy parameters stored in the parameter storing portion corresponding to the plurality of type identification information corresponding to other optical discs having different manufacturers and types stored in the type storing portion and the strategy parameters obtained by the parameter obtaining portion when another optical disc corresponding to the type identification information stored in the type storing portion is loaded.

According to this structure, since the strategy parameters corresponding to the optical disc are corrected based on the strategy parameters stored in the parameter storing portion corresponding to the plurality of type identification information corresponding to other optical discs having different manufacturers and types stored in the type storing portion and the strategy parameters obtained by the parameter obtaining portion when another optical disc corresponding to the type identification information stored in the type storing portion is loaded, the recording conditions can be set more appropriately.

More specifically, the characteristics unique to the pickup or the like of the optical disc recording apparatus are presented as a relationship between the strategy parameters that correspond to the plurality of other optical discs having different manufacturers and types stored in the type storing portion and define the recording conditions recommended by the manufacturer (i.e., the strategy parameters obtained when the optical disc is loaded) and the strategy parameters stored in the parameter storing portion (i.e., strategy parameters searched and set in advance by a method of test writing or the like). Then, since the strategy parameters corresponding to the optical disc are corrected based on both of them, the recording conditions can be set more appropriately.

In addition, as to the optical disc recording apparatus according to the present invention having the structure described above, the optical disc is a DVD-R, the strategy parameters include power of the laser beam of the optical pickup, and the parameter correcting portion adds a predetermined preset offset value to the power of the laser beam obtained by the parameter obtaining portion for the correction.

According to this structure, the optical disc is a DVD-R, the strategy parameters include power of the laser beam of the optical pickup, and the strategy parameters are corrected by adding a predetermined preset offset value to the obtained power of the laser beam. Therefore, the power of the laser beam of the optical pickup can be set appropriately.

More specifically, the characteristics unique to the pickup pf the optical disc recording apparatus concerning the power of the laser beam for the DVD-R are presented as a relationship between the strategy parameter defining the power of the laser beam recommended by the manufacturer and the strategy parameter defining the power of the laser beam stored in the parameter storing portion, and the relationship between them is expressed empirically as a predetermined offset value. Then, since the obtained power of the laser beam is corrected by adding a predetermined preset offset value to the same, the power of the laser beam for the optical pickup can be set appropriately.

In addition, as to the optical disc recording apparatus according to the present invention having the structure described above, the strategy parameters includes a β value indicating asymmetry of a record signal, and the parameter correcting portion corrects the strategy parameters by adding a predetermined preset offset value to the β value obtained by the parameter obtaining portion.

According to this structure, the strategy parameters include the β value indicating asymmetry of the record signal, and the obtained β value is corrected by adding a predetermined preset offset value to the same, so the β value can be set appropriately.

More specifically, the characteristics unique to the DVD-R in the optical disc recording apparatus concerning the β value indicating asymmetry of the record signal are presented as a relationship between the strategy parameter defining the β value recommended by the manufacturer and the strategy parameter defining the β value stored in the parameter storing portion, and the relationship between them is expressed empirically as a predetermined offset value. Then, since the obtained β value is corrected by adding the predetermined preset offset value to the same, the β value can be set appropriately.

## BRIEF DESCRIPTION OF THE DRAWINGS

Fig. 1 is a structural diagram showing an example of a disc recorder according to the present invention.
Fig. 2 is a functional structure diagram showing an example of a structure of main portions in the disc recorder according to the present invention.
Fig. 3A and 3B are explanatory diagrams for explaining examples of strategy parameters stored in a parameter memory portion.
Figs. 4A-4C are tables showing examples of the strategy parameters stored in an optical disc (here, a DVD-R).
Figs. 5A and 5B are graphs showing examples of a method for correcting the strategy parameters by the parameter correcting portion.
Fig. 6 is a flowchart showing an example of an operation of the disc recorder according to the present invention (mainly a DSP).

## DETAILED DESCRIPTION OF THE PREFERRED EMBODIMENTS

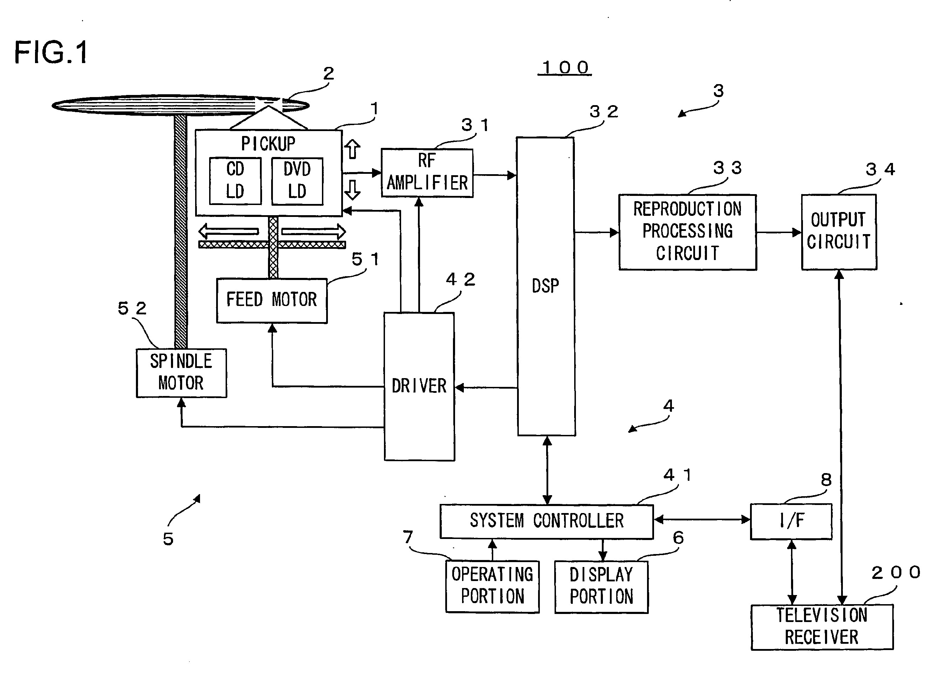

Hereinafter, embodiments of the present invention will be described with reference to the attached drawings. Fig. 1 is a structural diagram showing an example of a disc recorder according to the present invention. A disc recorder 100 (corresponding to the optical disc recording apparatus) includes a pickup device 1 according to the present invention, an output device 3, a control device 4, a driving device 5, a display portion 6, an operating portion 7, and an interface portion 8.

The pickup device 1 (corresponding to the optical pickup, or corresponding to a part of the identification information obtaining portion and a part of the parameter obtaining portion) includes a laser diode (LD) for CD and an LD for DVD, and it projects a laser beam to an optical disc 2 (here, a DVD-R) in accordance with preset recording conditions so as to write (to record) various information such as sound information or image information on the optical disc 2 (here, a DVD-R). Furthermore, the pickup device 1 converts reflection light from the optical disc 2 (here, a DVD-R) as an object to be read into an electric signal, so as to read various information such as sound information or image information stored in the optical disc 2 (a CD or a DVD) (here, strategy information defining the recording conditions).

In addition, the pickup device 1 is structured to be driven by a feed motor 51 so that it can move in the radial direction and in the vertical direction (approaching and separating directions) of the optical disc 2. Further, the pickup device 1 is driven by the feed motor 51 to move in the direction perpendicular to the optical disc 2 in accordance with an instruction from a DSP 32.

The output device 3 converts the information such as sound information and image information from the pickup device 1 into sounds and images, which are respectively delivered to a speaker and a monitor display disposed in a television receiver 200. The output device 3 includes an RF amplifier 31, a digital signal processor (DSP) 32, a reproduction processing circuit 33 and an output circuit 34. The RF amplifier 31 amplifies a signal from the pickup device 1 corresponding to the sound information, the image information or the like.

The DSP 32 and the reproduction processing circuit 33 perform various information processes for reproduction (e.g., an image processing and the like) on the signal from the RF amplifier 31. The output circuit 34 performs a DA conversion process and the like for delivering the information from the reproduction processing circuit 33 to the speaker and the monitor display disposed in the television receiver 200. In addition, the DSP 32 obtains various types of information (e.g., image information or the like) from the television receiver 200 via a system controller 41 and the interface portion 8, and it writes the information on the optical disc 2 via a driver 42 and the pickup device 1.

The control device 4 controls the operations of the pickup device 1 and the driving device 5 based on instruction operations received via the operating portion 7, and it includes the system controller 41 and the driver 42. The system controller 41 receives the information from the operating portion 7 and sends it to the DSP 32. It also sends information from the DSP 32 to the display portion 6. The driver 42 (corresponding to a part of the recording condition setting portion) controls operations of the pickup device 1 and the driving device 5 based on an instruction from the DSP 32.

The driving device 5 includes the feed motor 51 and a spindle motor 52. The feed motor 51 moves the pickup device 1 in the radial direction and in the vertical direction of the optical disc 2 based on an instruction from the driver 42. The spindle motor 52 drives the optical disc 2 to rotate based on an instruction from the driver 42.

The display portion 6 includes liquid crystal display (LCD) or the like, and it displays information from the DSP 32 so that the information can be viewed externally. The operating portion 7 includes various operational buttons or the like, and it receives an operational instruction from a user and delivers a corresponding operational signal to the DSP 32. The interface portion 8 is connected to the television receiver 200 so that communication can be performed between them, and it obtains various types of information (e.g., image information or the like) from the television receiver 200 in accordance with an instruction from the DSP 32 (the system controller 41).

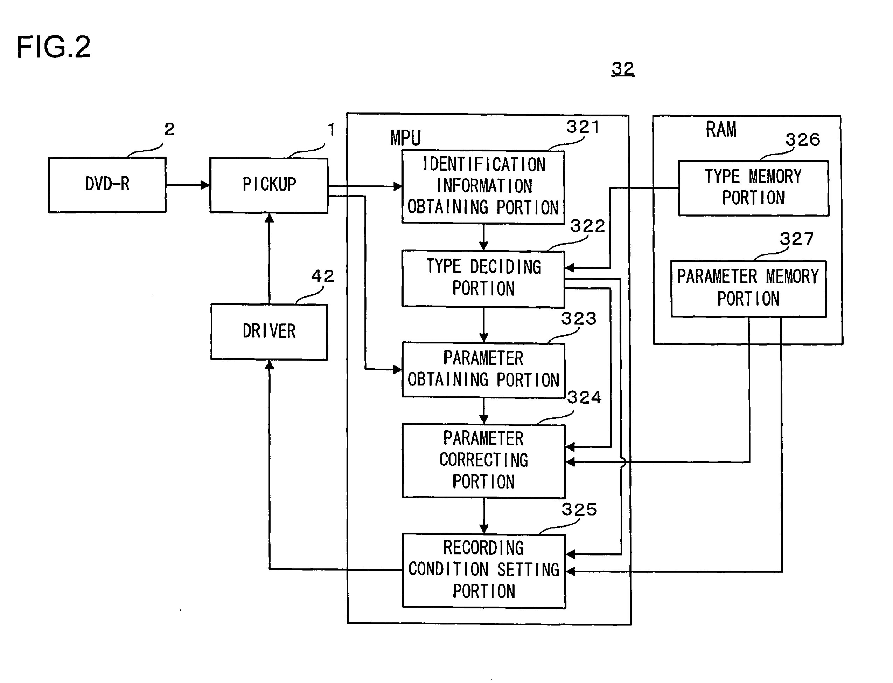

Fig. 2 is a functional structure diagram showing an example of a structure of main portions in the disc recorder 100 according to the present invention. The DSP 32 includes a random access memory (RAM), a micro processing unit (MPU) and a read only memory (ROM, not shown). The MPU has functional portions including an identification information obtaining portion 321, a type deciding portion 322, a parameter obtaining portion 323, a parameter correcting portion 324 and a recording condition setting portion 325. The RAM has functional portions including a type memory portion 326 and a parameter memory portion 327.

Here, the MPU reads and executes a control program stored in advance in the ROM (not shown) or the like, so as to work as the functional portions including the identification information obtaining portion 321, the type deciding portion 322, the parameter obtaining portion 323, the parameter correcting portion 324, the recording condition setting portion 325 and the like, and to let the RAM work as the functional portions including the type memory portion 326, the parameter memory portion 327 and the like.

In addition, among various types of data stored in the RAM or the ROM (not shown), the data that can be stored in a removable recording medium may be read with a driver of a hard disk drive, an optical disc drive, a flexible disc drive, a silicon disc drive, a cassette media reader or the like, for example. In this case, the recording medium may be a hard disk, an optical disc, a flexible disc, a CD, a DVD, a semiconductor memory or the like, for example.

The type memory portion 326 (corresponding to the type storing portion) is a functional portion for storing in advance a plurality of type identification information corresponding to DVD-Rs of different manufacturers and types. More specifically, the type memory portion 326 stores manufacture identifiers (MIDs) in advance as information for identifying manufacturers and types of the DVD-Rs, which are stored in PFI areas of a plurality of other DVD-Rs on the inner radius side. In other words, a plurality of MIDs of DVD-Rs having different manufacturers and types, which are assumed to be used are read and stored in the type memory portion 326 in advance when the disc recorder 100 is manufactured.

The parameter memory portion 327 (corresponding to the parameter storing portion) is a functional portion for storing strategy parameters that define recording conditions and are set in advance for each of the type identification information corresponding to the plurality of DVD-Rs having different manufacturers and types stored in the type memory portion 326 in association with the same. More specifically, the parameter memory portion 327 stores a power Pw, a $\beta$ value, a pulse width 3Ttop, a pulse width 4Ttop, a pulse width 5Ttop, a pulse width 6Ttop, a pulse width Tmp, and shift time 3-3Tld as the strategy parameters.

Here, the power Pw is power of the laser beam from the pickup device 1 when recording is performed, and the $\beta$ value is a parameter indicating asymmetry of the record signal, which is calculated by the following equation (1).

$$\beta = ((I_{14H} + I_{14L}) - (I_{3H} + I_{3L}))/(2 \times (I_{14H} - I_{14L})) \qquad (1)$$

Note that $I_{14H}$ and $I_{14L}$ are a high level and a low level of the RF signal corresponding to a standard "14T", and that $I_{3H}$ and $I_{3L}$ are a high level and a low level of the RF signal corresponding to a standard "3T", respectively.

In addition, the pulse widths 3Ttop, 4Ttop, 5Ttop and 6Ttop are pulse widths of leading pulses of signals corresponding to standards "3T", "4T", "5T" and "6T-14T", respectively. The pulse width Tmp is a pulse width of a pulse succeeding the signals corresponding to the standards "4T-14T" (i.e., a multiple pulse). The shift time 3-3Tld is a shift time of the leading pulse of the signal corresponding to the standard "3T".

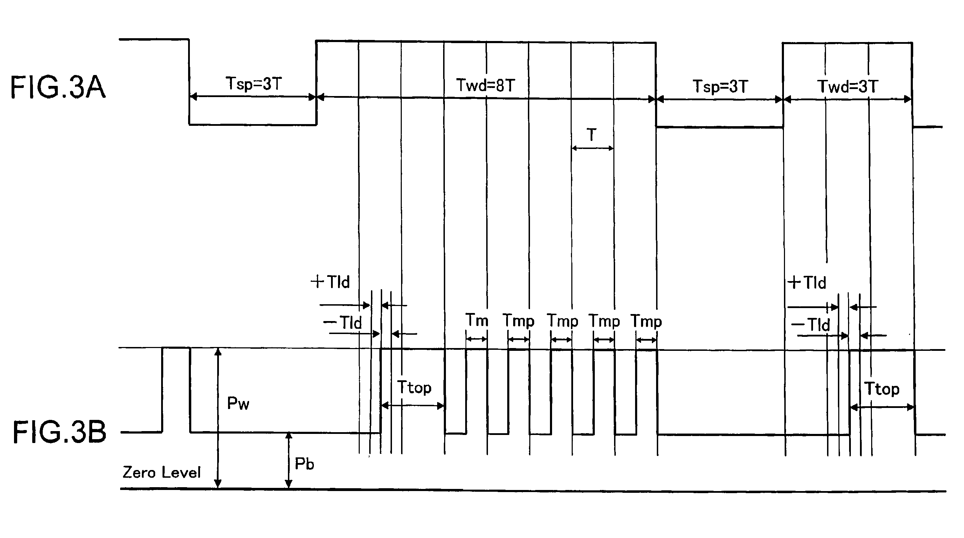

Fig. 3A and 3B are explanatory diagrams for explaining examples of strategy parameters stored in the parameter memory portion 327. Fig. 3A shows record data including spaces and marks, and Fig. 3B shows the record signal (i.e., a record pulse). Here, the case where a space of 3T, a mark of 8T, a space of 3T and a mark of 3T are recorded in this order as shown in Fig. 3A and 3B will be described. As shown in Fig. 3B, the power Pw is a power value with respect to the zero level of each pulse. Note that the record pulse has an output power corresponding to the power Pb as a minimum level.

The mark of 3T includes only the leading pulse having a pulse width of Ttop (i.e., 3Ttop). In addition, the mark of 8T includes the leading pulse having a pulse width of Ttop (i.e., 8Ttop) and five succeeding pulses each of which has a pulse width of Tmp. In the same manner, the marks of 4T-14T include the leading pulses having pulse widths of Ttop (i.e., 4Ttop-14Ttop) and 1-11 succeeding pulses each of which has a pulse width of Tmp, respectively. In addition, the shift time Tld is shift time of the leading pulse having the pulse width Ttop (time of a leading phase if it is positive, or delay time of lagging phase if it is negative).

With reference to Fig. 2 again, a functional structure of the DSP 32 will be described. The identification information obtaining portion 321 (corresponding to a part of the identification information obtaining portion) is a functional portion for reading and obtaining via the pickup device 1 type identification information for identifying a manufacturer and a type of the DVD-R stored in the optical disc (here, the DVD-R) 2.

The type deciding portion 322 is a functional portion for deciding whether or not the type identification information obtained by the identification information obtaining portion 321 matches any one of type identification information corresponding to a plurality of DVD-Rs having different manufacturers and types stored in the type memory portion 326. In other words, the type deciding portion 322 decides based on the type identification information whether or not the DVD-R is one of manufacturers and types of the strategy parameters stored in the parameter memory portion 327 in advance.

The parameter obtaining portion 323 (corresponding to a part of the parameter obtaining portion) is a functional portion for reading and obtaining strategy parameters that are stored in the optical disc (here, the DVD-R) 2 and are recommended by the manufacturer via the pickup device 1 if the type deciding portion 322 decides that the type identification information obtained by the identification information obtaining portion 321 does not match any one of type identification information corresponding to a plurality of DVD-Rs having different manufacturers and types stored in the type memory portion 326 (i.e., that the type identification information obtained by the identification information obtaining portion 321 is not stored in the type memory portion 326).

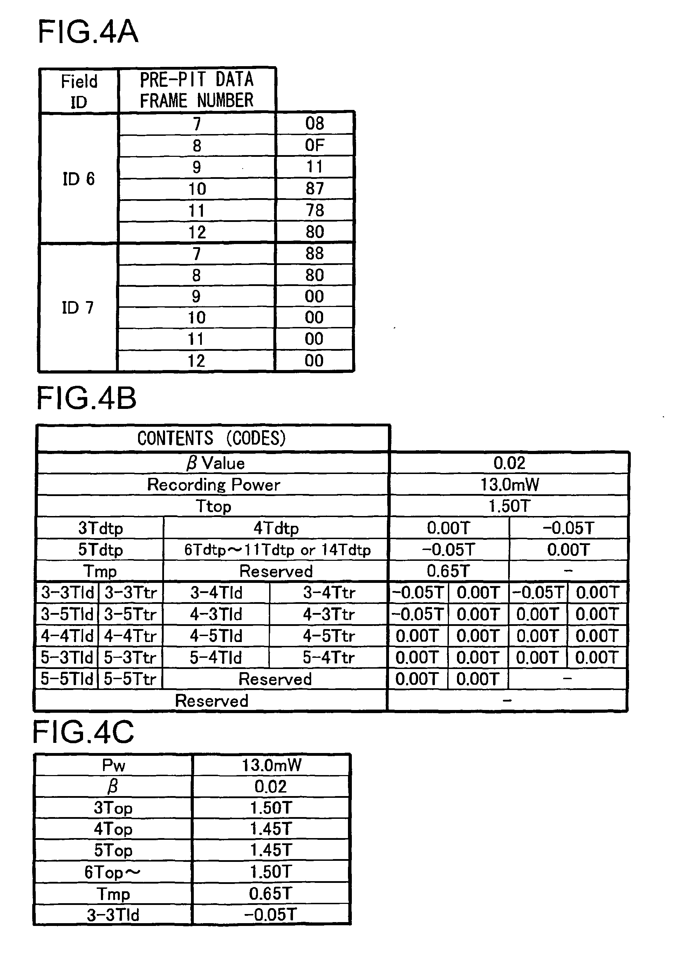

Figs. 4A-4C are tables showing examples of the strategy parameters stored in the optical disc (here, the DVD-R) 2. Fig. 4A is a table showing an example of the strategy parameters stored in land pre-pits (LPP) on the inner radius side of the optical disc (here, the DVD-R) 2. Fig. 4B is a table showing description contents of each frame number of the strategy parameters shown in Fig. 4A, and Fig. 4C is a table showing contents of the strategy parameters shown in Fig. 4A.

As shown in Fig. 4A, for example, the area having the field ID "6" and the frame number "7" stores the β value "08", which means "0.02" as shown in Fig. 4B. In addition, as shown in Fig. 4A, for example, the area having the field ID "6" and the frame number "8" stores power Pw "0F", which means "13 mW" as shown in Fig. 4B.

Further, as shown in Fig. 4A, for example, the area having the field ID "6" and the frame number "9" stores the pulse width Ttop "11", which means "1.5T" as shown in Fig. 4B. Here, T is unit time defined in the standard. Note that the above-mentioned pulse widths 3Ttop-14Ttop are determined from the equation (2) below.

$$nTtop = Ttop + nTdtp \quad (2)$$

Here, n is 3-14, and 3Tdtp-14Tdtp are stored in the area having the field ID "6" and the frame numbers "10" and "11" as shown in Fig. 4B. For example, 4Tdtp is "-0.05T", and 4Ttop means 1.45T (i.e., 1.50T - 0.05T) from the above equation (2).

Further, as shown in Fig. 4A, for example, a first digit of the area having the field ID "6" and the frame number "12" stores the pulse width Tmp "8", which means "0.65T" as shown in Fig. 4B. In this way, the strategy parameters stored in the land pre-pits (LPP) on the inner radius side of the optical disc (here, the DVD-R) 2 are determined as shown in Fig. 4C. Note that the strategy parameters stored in the land pre-pits (LPP) are referred to as codes with a prefix "LPP_" in the following description. For example, the power Pw and the β value of the strategy parameters stored in the land pre-pits (LPP) are referred to as LPP_Pw and LPP_β, respectively.

With reference to Fig. 2 again, a functional structure of the DSP 32 will be described. The parameter correcting portion 324 is a functional portion for correcting the strategy parameters corresponding to the DVD-R obtained by the parameter obtaining portion 323 based on the strategy parameters stored in the parameter memory portion 327 corresponding to a plurality of other DVD-Rs having different manufacturers and types stored in the type memory portion 326 and the strategy parameters obtained by the parameter obtaining portion 323 when another DVD-R corresponding to the type identification information stored in the type identification information stored in the type memory portion 326 is loaded.

More specifically, the characteristics unique to the pickup device 1 or the like of the disc recorder 100 are presented as a relationship between the strategy parameters that correspond to the plurality of other DVD-Rs having different manufacturers and types stored in the type memory portion 326 and define the recording conditions recommended by the manufacturer (i.e., the strategy parameters obtained when the DVD-R is loaded) and the strategy parameters stored in the parameter memory portion 327 (i.e., strategy parameters searched and set by a method of test writing or the like). Therefore, the parameter correcting portion 324 corrects the strategy parameter corresponding to the DVD-R obtained by the parameter obtaining portion 323 based on the both parameters.

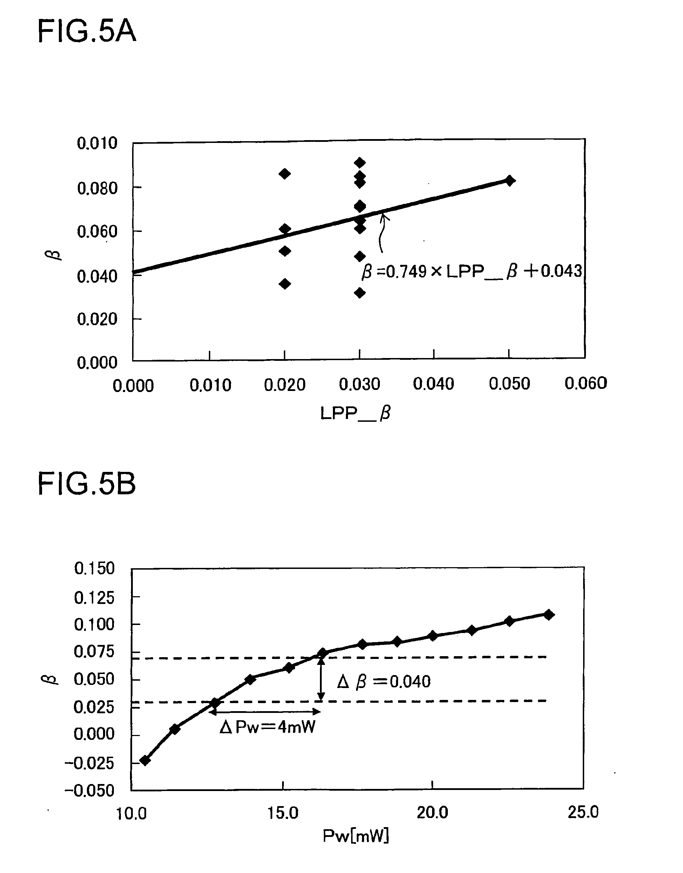

Figs. 5A and 5B are graphs showing examples of a method for correcting the strategy parameters by the parameter correcting portion 324. Fig. 5A is a graph showing a method of correcting the $\beta$ value of the strategy parameters, and Fig. 5B is a graph showing a method of correcting the power Pw of the strategy parameters. In the graph shown in Fig. 5A, the horizontal axis represents LPP_$\beta$ that is the $\beta$ value recommended by the manufacturer, while the vertical axis represents the $\beta$ value stored in the parameter memory portion 327 (i.e., the $\beta$ value set as the recording condition). The plotted dots correspond to the plurality of DVD-Rs having different manufacturers and types stored in the type memory portion 326, and the line is a regression line of the plotted dots. This line is expressed by the equation (3) below.

$$\beta = 0.749 \times \text{LPP\_}\beta + 0.043 \quad (3)$$

Therefore, the parameter correcting portion 324 corrects the parameter by adding a predetermined offset value (e.g., 0.040) to LPP_$\beta$ that is the $\beta$ value represented by the manufacturer.

In addition, in Fig. 5B, the horizontal axis represents the $\beta$ value stored in the parameter memory portion 327 (i.e., the $\beta$ value set as the recording condition), while the vertical axis represents the power Pw stored in the parameter memory portion 327 (i.e., the power Pw set as the recording condition). The $\beta$ value presents a curve that is convex upward with respect to the power Pw as shown in Fig. 5B, and the parameter correcting portion 324 corrects the $\beta$ value by adding a predetermined offset value (e.g., 0.040) to LPP_$\beta$ as described above. Therefore, corresponding to this correction of the $\beta$ value, the parameter correcting portion 324 corrects the power Pw by adding a predetermined offset value (e.g., 4.0 mW) to the power LPP_Pw recommended by the manufacturer.

With reference to Fig. 2 again, the functional structure of the DSP 32 will be described. The recording condition setting portion 325 (corresponding to a part of the recording condition setting portion) is a functional portion for setting the recording conditions of the DVD-R via the driver 42 based on the strategy parameter corrected by the parameter correcting portion 324, when the type deciding portion 322 decides that the type identification information obtained by the identification information obtaining portion 321 does not match any one of the type identification information corresponding to a plurality of DVD-Rs having different manufacturers and types stored in the type memory portion 326 (i.e., the type identification information obtained by the identification information obtaining portion 321 is not stored in the type memory portion 326).

In addition, if the type deciding portion 322 has decided that the type identification information obtained by the identification information obtaining portion 321 matches any one of the type identification information corresponding to a plurality of DVD-Rs having different manufacturers and types stored in the type memory portion 326 (i.e., the type identification information obtained by the identification information obtaining portion 321 is stored in the type memory portion 326), the recording condition setting portion 325 reads the strategy parameter corresponding to the type identification information that was decided to match from the parameter memory portion 327 and sets the recording conditions based on the read strategy parameter.

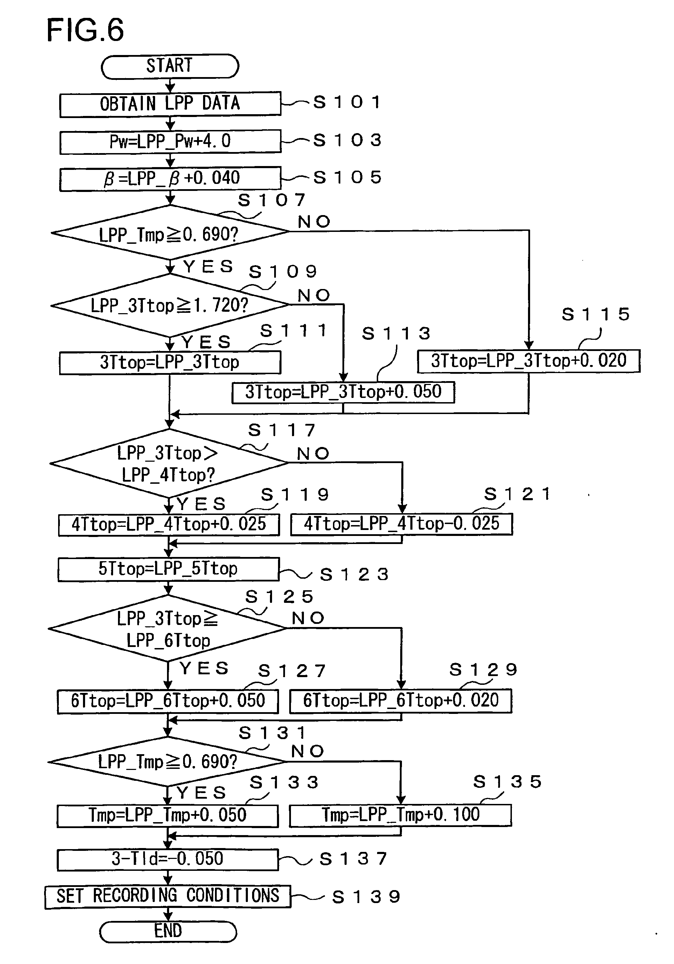

Fig. 6 is a flowchart showing an example of an operation of the disc recorder 100 according to the present invention (mainly the DSP 32). Furthermore, here for convenience sake, the case will be described in which the type deciding portion 322 decides that the type identification information obtained by the identification information obtaining portion 321 does not match any one of the type identification information corresponding to a plurality of DVD-Rs having different manufacturers and types stored in the type memory portion 326 (i.e., the type identification information obtained by the identification information obtaining portion 321 is not stored in the type memory portion 326).

First, the parameter obtaining portion 323 obtains the strategy parameter stored in the optical disc (here, the DVD-R) 2 and is recommended by the manufacturer (S101). Then, the parameter correcting portion 324 corrects the parameter by adding the offset value (here, 4.0 mW) to the parameter LPP_Pw obtained in the step S101 so that the power Pw is determined (S 103). Then, the parameter correcting portion 324 adds the offset value (here, 0.040) to the parameter LPP_$\beta$ obtained in the step S101 1 for correction so that the $\beta$ value is determined (S105).

Then, the parameter correcting portion 324 decides whether or not LPP_Tmp obtained in the step S101 is a predetermined threshold value (here, 0.690) or larger (S 107). If it is decided that LPP_Tmp is not the predetermined threshold value (here, 0.690) or larger (i.e., that LPP_Tmp is smaller than 0.690) (NO in S107), the parameter correcting portion 324 adds the offset value (here, 0.020) to the parameter LPP_3Ttop obtained in the step S101 for correction so that the pulse width 3Ttop is determined (S115), and the process goes to the step S 117. If it is decided that LPP_Tmp is 0.690 or larger (YES in S107), the parameter correcting portion 324 decides whether or not LPP_3Ttop obtained in the step S101 is a predetermined threshold value (here, 1.720) or larger (S109).

If it is decided that LPP_3Ttop is 1.720 or larger (YES in S 109), the parameter correcting portion 324 does not correct the parameter LPP_3Ttop obtained in the step S101 for setting the pulse width 3 Ttop (S111), and the process goes to the step S 117. If it is decided that LPP_3Ttop is not 1.720 or larger (i.e., is smaller than 1.720) (NO in S109), the parameter correcting portion 324 adds the offset value (here, 0.050) to the parameter LPP_3Ttop obtained in the step S101 for correction, so that the pulse width 3Ttop is determined (S113), and the process goes to the step S117.

If the process of the step S111, the step S 113 or the step S 115 is finished, the parameter correcting portion 324 decides whether or not the parameter LPP_3Ttop obtained in the step S101 is larger than the parameter LPP_4Ttop (S117). If it is decided that the parameter LPP_3Ttop is larger than the parameter LPP_4Ttop (YES in S 117), the parameter correcting portion 324 adds the offset value (here, 0.025) to the parameter LPP_4Ttop obtained in the step S101 for correction so that the pulse width 4Ttop is determined (S119), and the process goes to the step S 123. If it is decided that the parameter LPP_3Ttop is smaller than or equal to the parameter LPP_4Ttop (NO in S 117), the parameter correcting portion 324 adds the offset value (here, -0.025) to the parameter LPP_4Ttop obtained in the step S101 for correction so that the pulse width 4Ttop is determined (S121), and the process goes to the step S123.

If the process of the step S 119 or the step S121 is finished, the parameter correcting portion 324 does not correct the parameter LPP_5Ttop obtained in the step S101, and the pulse width 5Ttop is set (S123). Then, the parameter correcting portion 324 decides whether or not the parameter LPP_3Ttop obtained in the step S101 is larger than or equal to the parameter LPP_6Ttop obtained in the step S101 (S 125). If it is decided that the parameter LPP_3Ttop is larger than or equal to the parameter LPP_6Ttop (YES in S125), the parameter correcting portion 324 adds the offset value (here, 0.050) to the parameter LPP_6Ttop obtained in the step S101 so as to correct the same and to determine the pulse width 6Ttop (S127), and the process goes to the step S 131. If it is decided that the parameter LPP_3Ttop is smaller than parameter LPP_6Ttop (NO in S125), the parameter correcting portion 324 adds the offset value (here, 0.020) to the parameter LPP_6Ttop obtained in the step S101 to as to correct the same for determining the pulse width 6Ttop (S129), and the process goes to the step S131.

If the process of the step S127 or the step S129 is finished, the parameter correcting portion 324 decides whether or not the parameter LPP_Tmp obtained in the step S101 is larger than or equal to a predetermined threshold value (here, 0.690) (S131). If it is decided that the parameter LPP_Tmp is 0.690 or larger (YES in S131), the parameter correcting portion 324 adds the offset value (here, 0.050) to the parameter LPP_Tmp obtained in the step S101 1 so as to correct the same for obtaining the pulse width Tmp (S133), and the process goes to the step S137. If it is decided that the parameter LPP_Tmp is smaller than 0.690 (NO in S131), the parameter correcting portion 324 adds the offset value (here, 0.100) to the parameter LPP_Tmp obtained in the step S101 so as to correct the same for determining the pulse width Tmp (S135), and the process goes to the step S137.

If the process of the step S 133 or the step S135 is finished, the parameter correcting portion 324 sets the shift time 3-Tld to a predetermined value (here, -0.050) (S 137). Then, the recording condition setting portion 325 sets via the driver 42 the recording conditions of the DVD-R based on the parameters set in the steps S103 to S137 (S139), and the process is finished.

Thus, the type identification information, which is information for identifying a manufacturer and a type of the DVD-R stored in an optical disc (here, the DVD-R) 2, is read and obtained. In addition, the type memory portion 326 stores in advance a plurality of type identification information corresponding to other DVD-Rs having different manufacturers and types, and it is decided whether or not the obtained type identification information matches any one of the plurality of type identification information corresponding to other DVD-Rs having different manufacturers and types stored in the type memory portion 326. Then, if it is decided that the former type identification information does not match any one of the latter type identification information, the strategy parameter that is stored in the DVD-R and defines recording conditions recommended by the manufacturer is read and obtained, and the obtained strategy parameter is corrected. Then, the recording conditions for the DVD-R is set based on the corrected strategy parameter. Therefore, the recording conditions can be set appropriately in short time.

More specifically, the strategy parameter defining the recording conditions recommended by the manufacturer is corrected, and the recording conditions is set based on the corrected strategy parameter. Therefore, the recording conditions can be set without recording test data in the test area, and the strategy parameter recommended by the manufacturer can be corrected to an appropriate value and is set. Thus, the recording conditions can be set appropriately in short time.

In addition, preset strategy parameters are stored in the parameter memory portion 327 for each of the plurality of type identification information corresponding to other DVD-Rs having different manufacturers and types stored in the type memory portion 326 in association with the same. If it is decided to match any one of the plurality of type identification information corresponding to other DVD-Rs having different manufacturers and types stored in the type memory portion 326, the strategy parameter corresponding to the type identification information that is decided to match is read from the parameter memory portion 327, and the recording conditions are set based on the read strategy parameter. Thus, the recording conditions can be set appropriately in shorter time.

More specifically, as to DVD-Rs that are assumed to be used when the disc recorder 100 is manufactured (i.e., corresponding to the plurality of other DVD-Rs having different manufacturers and types stored in the type memory portion 326), appropriate recording conditions are searched by a method of test writing or the like, so that the strategy parameters defining the recording conditions are stored in advance in the parameter memory portion 327. Thus, the strategy parameters are read from the parameter memory portion 327, and the recording conditions are set based on the read strategy parameter, so that the recording conditions can be set appropriately in shorter time.

In addition, the strategy parameter corresponding to the DVD-R is corrected based on the strategy parameters that correspond to the type identification information corresponding to the plurality of other DVD-Rs having different manufacturers and types stored in the type memory portion 326 and are stored in the parameter memory portion 327 and the strategy parameters obtained when another DVD-R corresponding to the type identification information stored in the type memory portion 326. Therefore, the recording conditions can be set more appropriately.

More specifically, the characteristics unique to the pickup device 1 or the like of the disc recorder 100 are presented as a relationship between the strategy parameters that correspond to the plurality of other DVD-Rs having different manufacturers and types stored in the type memory portion 326 and define the recording conditions recommended by the manufacturer (i.e., the strategy parameters obtained when the DVD-R is loaded) and the strategy parameters stored in the parameter memory portion 327 (i.e., strategy parameters searched and set in advance by a method of test writing or the like). Then, since the strategy parameters corresponding to the DVD-R are corrected based on both of them, the recording conditions can be set more appropriately.

In addition, the optical disc is a DVD-R, the strategy parameters include power of the laser beam of the optical pickup, and the obtained power of the laser beam is corrected by adding a predetermined preset offset value (here, 4.0 mW). Therefore, the power of the laser beam of the optical pickup can be set appropriately.

More specifically, the characteristics unique to the pickup device 1 of the disc recorder 100 concerning the power of the laser beam for the DVD-R are presented as a relationship between the strategy parameter defining the power of the laser beam recommended by the manufacturer (LPP_Pw) and the strategy parameter defining the power of the laser beam stored in the parameter memory portion 327, and the relationship between them is expressed empirically as a predetermined offset value (see Fig. 5). Then, since the obtained power of the laser beam is corrected by adding a predetermined preset offset value to the same, the power of the laser beam for the optical pickup can be set appropriately.

In addition, the strategy parameters include the $\beta$ value indicating asymmetry of the record signal, and the strategy parameters are corrected by adding a predetermined preset offset value (here, 0.040) to the same, so the $\beta$ value can be set appropriately.

More specifically, the characteristics unique to the DVD-R in the disc recorder 100 concerning the $\beta$ value indicating asymmetry of the record signal are presented as a relationship between the strategy parameter defining the $\beta$ value recommended by the manufacturer (LPP_$\beta$) and the strategy parameter defining the $\beta$ value stored in the parameter memory portion 327, and the relationship between them is expressed empirically as a predetermined offset value (see Fig. 5). Then, since the obtained $\beta$ value is corrected by adding the predetermined preset offset value to the same, the $\beta$ value can be set appropriately.

Note that the present invention can be applied to the following forms.

(A) Although in the embodiment described above the DSP 32 works as the functional portions including the identification information obtaining portion 321, the type deciding portion 322, the parameter obtaining portion 323, the parameter correcting portion 324, the recording condition setting portion 325 and the like, it is sufficient if at least one functional portion is realized by the circuit.

(B) Although in the embodiment described above the optical disc is a DVD-R, it can be other types of writable DVDs (e.g., a DVD-RW and the like) or other types of optical discs (e.g., a CD-RW or the like).

(C) Although in the embodiment described above the optical disc apparatus is the disc recorder 100, it can be other types of apparatuses for recording information by projecting a laser beam from the optical pickup to an optical disc (e.g., a CD recorder or the like disposed in a personal computer or the like).

(D) Although in the embodiment described above the parameter correcting portion 324 corrects LPP_$\beta$ that is the $\beta$ value recommended by the manufacturer by adding a predetermined offset value (e.g., 0.040) to the same, the parameter correcting portion 324 may correct it by other methods. For example, the parameter correcting portion 324 may correct it by using the equation (3) described above.

(E) Although in the embodiment described above the parameter correcting portion 324 corrects the power Pw by adding a predetermined offset value (e.g., 4.0 mW) to the power LPP_Pw recommended by the manufacturer, the parameter correcting portion 324 may correct it by other methods. For example, the parameter correcting portion 324 may correct it by using an equation similar to the equation (3) described above (a linear equation with respect to the power LPP_Pw).

## Claims

1. An optical disc recording apparatus for recording information on an optical disc by projecting a laser beam from an optical pickup to the optical disc, the apparatus comprising:

    an identification information obtaining portion for reading and obtaining type identification information stored in the optical disc for identifying a manufacturer and a type of the optical disc;
    a type storing portion for storing a plurality of type identification information corresponding to other optical discs having different manufacturers and types in advance;
    a type deciding portion for deciding whether or not the type identification information obtained by the identification information obtaining portion matches any one of the plurality of type identification information corresponding to other optical discs having different manufacturers and types stored in the type storing portion;
    a parameter obtaining portion for reading and obtaining strategy parameters stored in the optical disc for defining recording conditions recommended by the manufacturer if the type deciding portion decides that the former type identification information does not match any one of the latter type identification information;
    a parameter correcting portion for correcting the strategy parameter obtained by the parameter obtaining portion; and
    a recording condition setting portion for setting recording conditions for the optical disc based on the strategy parameter corrected by the parameter correcting portion.

2. The optical disc recording apparatus according to claim 1, further comprising a parameter storing portion for storing a preset strategy parameter for each of the plurality of type identification information corresponding to other optical discs having different manufacturers and types stored in the type storing portion, in association with the same, wherein if the type deciding portion decides that the former type identification information matches any one of the latter type identification information, the recording condition setting portion reads the strategy parameter corresponding to the type identification information that was decided to match from the parameter storing portion and sets the recording conditions based on the read strategy parameter.

3. The optical disc recording apparatus according to claim 1 or 2, wherein the parameter correcting portion corrects the strategy parameter corresponding to the optical disc based on the strategy parameters stored in the parameter storing portion corresponding to the plurality of type identification information corresponding to other optical discs having different manufacturers and types stored in the type storing portion and the strategy parameter obtained by the parameter obtaining portion when another optical disc corresponding to the type identification information stored in the type storing portion is loaded.

4. The optical disc recording apparatus according to at least one of claims 1-3, wherein
    the optical disc is a DVD-R,
    the strategy parameter includes power of the laser beam of the optical pickup, and
    the parameter correcting portion adds a predetermined preset offset value to the power of the laser beam obtained by the parameter obtaining portion for the correction.

5. The optical disc recording apparatus according to claim 5, wherein
    the strategy parameter includes a $\beta$ value indicating asymmetry of a record signal, and
    the parameter correcting portion adds a predetermined preset offset value to the $\beta$ value obtained by the parameter obtaining portion for the correction.

6. An optical disc recording apparatus for recording information on a DVD-R by projecting a laser beam to the DVD-R from an optical pickup, the apparatus comprising:

    an identification information obtaining portion for reading and obtaining type identification information stored in the DVD-R for identifying a manufacturer and a type of the DVD-R;
    a type storing portion for storing a plurality of type identification information corresponding to other DVD-Rs having different manufacturers and types in advance;

a parameter storing portion for storing a preset strategy parameter defining recording conditions for each of the plurality of type identification information corresponding to other DVD-Rs having different manufacturers and types stored in the type storing portion, in association with the same;

a type deciding portion for deciding whether or not the type identification information obtained by the identification information obtaining portion matches any one of the plurality of type identification information corresponding to other DVD-Rs having different manufacturers and types stored in the type storing portion;

a parameter obtaining portion for reading and obtaining strategy parameters stored in the DVD-R recommended by the manufacturer if the type deciding portion decides that the former type identification information does not match any one of the latter type identification information;

a parameter correcting portion for correcting the strategy parameter corresponding to the DVD-R obtained by the parameter obtaining portion based on the strategy parameters stored in the parameter storing portion corresponding to the plurality of type identification information corresponding to other DVD-Rs having different manufacturers and types stored in the type storing portion and the strategy parameter obtained by the parameter obtaining portion when another DVD-R corresponding to the type identification information stored in the type storing portion is loaded; and

a recording condition setting portion for setting recording conditions for corresponding to the DVD-R obtained by the parameter obtaining portion based on the strategy parameters stored in the parameter storing portion corresponding to the plurality of type identification information corresponding to other DVD-Rs having different manufacturers and types stored in the type storing portion and the strategy parameter obtained by the parameter obtaining portion when another DVD-R corresponding to the type identification information stored in the type storing portion is loaded; and

a recording condition setting portion for setting recording conditions for the DVD-R based on the strategy parameter corrected by the parameter correcting portion, wherein

if the type deciding portion decides that the former type identification information matches any one of the latter type identification information, the recording condition setting portion reads the strategy parameter corresponding to the type identification information that was decided to match from the parameter storing portion and sets the recording conditions based on the read strategy parameter,

the strategy parameter includes power of the laser beam of the optical pickup and a $\beta$ value indicating asymmetry of a record signal, and

the parameter correcting portion adds a predetermined preset offset value to the power of the laser beam obtained by the parameter obtaining portion for the correction and adds a predetermined preset offset value to the $\beta$ value obtained by the parameter obtaining portion for the correction.

# FIG.1

EP 1 950 754 A1

# FIG.2

FIG.2 — Block diagram showing DVD-R (2), PICKUP (1), DRIVER (42), MPU (32) containing IDENTIFICATION INFORMATION OBTAINING PORTION (321), TYPE DECIDING PORTION (322), PARAMETER OBTAINING PORTION (323), PARAMETER CORRECTING PORTION (324), RECORDING CONDITION SETTING PORTION (325), and RAM containing TYPE MEMORY PORTION (326) and PARAMETER MEMORY PORTION (327).

EP 1 950 754 A1

FIG.3A

Tsp=3T    Twd=8T    Tsp=3T    Twd=3T

T

+Tld                              +Tld
−Tld    Tm Tmp Tmp Tmp Tmp    −Tld

FIG.3B

Pw    Ttop                              Ttop

Zero Level    Pb

## FIG.4A

| Field ID | PRE-PIT DATA FRAME NUMBER | |
|---|---|---|
| ID 6 | 7 | 08 |
| | 8 | 0F |
| | 9 | 11 |
| | 10 | 87 |
| | 11 | 78 |
| | 12 | 80 |
| ID 7 | 7 | 88 |
| | 8 | 80 |
| | 9 | 00 |
| | 10 | 00 |
| | 11 | 00 |
| | 12 | 00 |

## FIG.4B

| CONTENTS (CODES) | | | | | | | |
|---|---|---|---|---|---|---|---|
| $\beta$ Value | | | | 0.02 | | | |
| Recording Power | | | | 13.0mW | | | |
| Ttop | | | | 1.50T | | | |
| 3Tdtp | | 4Tdtp | | 0.00T | | −0.05T | |
| 5Tdtp | | 6Tdtp~11Tdtp or 14Tdtp | | −0.05T | | 0.00T | |
| Tmp | | Reserved | | 0.65T | | − | |
| 3-3Tld | 3-3Ttr | 3-4Tld | 3-4Ttr | −0.05T | 0.00T | −0.05T | 0.00T |
| 3-5Tld | 3-5Ttr | 4-3Tld | 4-3Ttr | −0.05T | 0.00T | 0.00T | 0.00T |
| 4-4Tld | 4-4Ttr | 4-5Tld | 4-5Ttr | 0.00T | 0.00T | 0.00T | 0.00T |
| 5-3Tld | 5-3Ttr | 5-4Tld | 5-4Ttr | 0.00T | 0.00T | 0.00T | 0.00T |
| 5-5Tld | 5-5Ttr | Reserved | | 0.00T | 0.00T | − | |
| Reserved | | | | − | | | |

## FIG.4C

| Pw | 13.0mW |
|---|---|
| $\beta$ | 0.02 |
| 3Top | 1.50T |
| 4Top | 1.45T |
| 5Top | 1.45T |
| 6Top~ | 1.50T |
| Tmp | 0.65T |
| 3-3Tld | −0.05T |

## FIG.5A

$\beta = 0.749 \times LPP\_\beta + 0.043$

## FIG.5B

$\Delta \beta = 0.040$

$\Delta Pw = 4mW$

# FIG.6

START

OBTAIN LPP DATA — S 1 0 1

Pw=LPP_Pw+4. 0 — S 1 0 3

β=LPP_β+0. 040 — S 1 0 5

S 1 0 7
LPP_Tmp≧0. 690?
NO
YES
S 1 0 9
LPP_3Ttop≧1. 720?
NO
YES   S 1 1 1
3Ttop=LPP_3Ttop

S 1 1 3
3Ttop=LPP_3Ttop+0. 050

S 1 1 5
3Ttop=LPP_3Ttop+0. 020

S 1 1 7
LPP_3Ttop>
LPP_4Ttop?
NO
YES   S 1 1 9
4Ttop=LPP_4Ttop+0. 025

S 1 2 1
4Ttop=LPP_4Ttop−0. 025

5Ttop=LPP_5Ttop — S 1 2 3

S 1 2 5
LPP_3Ttop≧
LPP_6Ttop
NO
YES   S 1 2 7
6Ttop=LPP_6Ttop+0. 050

S 1 2 9
6Ttop=LPP_6Ttop+0. 020

S 1 3 1
LPP_Tmp≧0. 690?
NO
YES   S 1 3 3
Tmp=LPP_Tmp+0. 050

S 1 3 5
Tmp=LPP_Tmp+0. 100

3-Tld=−0. 050 — S 1 3 7

SET RECORDING CONDITIONS — S 1 3 9

END

European Patent
Office

**EUROPEAN SEARCH REPORT**

Application Number

EP 08 00 1209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/109418 A (KONINKL PHILIPS ELECTRONICS NV [NL]; VAN ENDERT TONY P [BE]; SCHREURS) 17 November 2005 (2005-11-17) | 1 | INV.<br>G11B7/125<br>G11B7/0045<br>G11B19/12 |
| Y | * page 1 - page 8; figure 1 * ----- | 2-6 | ADD.<br>G11B7/00 |
| X | ECMA: "Standard ECMA-359 : DVD Recordable Disk (DVD-R)Standard ECMA-359" INTERNET CITATION, [Online] XP002366202 Retrieved from the Internet: URL:http://www.ecma-international.org/> [retrieved on 2006-02-06] | 1 | |
| Y | Annex H; section 13; section 28 ----- | 2-6 | |
| A | GIESELMANN H: "Kreuzverhör" C'T MAGAZIN FÜR COMPUTERTECHNIK, vol. 2004, no. 5, 23 February 2004 (2004-02-23), pages 132-141, XP007904735 * page 132 - page 134 * ----- | 1-6 | |
| A | GIESELMANN H: "Heiße Scheiben" C'T MAGAZIN FÜR COMPUTERTECHNIK, vol. 2004, no. 10, 3 May 2004 (2004-05-03), pages 138-147, XP007904736 * the whole document * ----- | 1-6 | TECHNICAL FIELDS SEARCHED (IPC)<br><br>G11B |
| A | GIESELMANN H: "Das große Brennen" C'T MAGAZIN FÜR COMPUTERTECHNIK, vol. 2004, no. 01, 29 December 2003 (2003-12-29), pages 82-87, XP007904737 * page 84 * ----- | 1-6 | |

The present search report has been drawn up for all claims

| Place of search | Date of completion of the search | Examiner |
|---|---|---|
| The Hague | 19 May 2008 | Zimmer, René |

EPO FORM 1503 03.82 (P04C01)

EP 1 950 754 A1

## ANNEX TO THE EUROPEAN SEARCH REPORT
## ON EUROPEAN PATENT APPLICATION NO.

EP 08 00 1209

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2008

| Patent document cited in search report | Publication date | Patent family member(s) | Publication date |
|---|---|---|---|
| WO 2005109418 A | 17-11-2005 | AT 387708 T<br>CN 1950899 A<br>JP 2007537557 T<br>KR 20070008722 A<br>US 2008008063 A1 | 15-03-2008<br>18-04-2007<br>20-12-2007<br>17-01-2007<br>10-01-2008 |

EPO FORM P0459

For more details about this annex : see Official Journal of the European Patent Office, No. 12/82

19

**REFERENCES CITED IN THE DESCRIPTION**

**Patent documents cited in the description**

- JP 2006323884 A